# EUROPEAN PATENT SPECIFICATION

(11) **EP 4 551 579 B1**
(45) Date of publication and mention of the grant of the patent: **29.04.2026**
(21) Application number: 23749264.0
(22) Date of filing: 07.07.2023
(51) Int. Cl.: C07F 7/08, C07F 7/18, C08G 77/04

(54) **SYNTHESIS AND USE OF A CARBAMATE-FUNCTIONAL ALKOXYSILALKYLENESILANE COMPOUND**
SYNTHESE UND VERWENDUNG EINER CARBAMAT-FUNKTIONELLEN ALKOXYSILALKYLENSILANVERBINDUNG
SYNTHÈSE ET UTILISATION D'UN COMPOSÉ ALCOXYSILALKYLÈNESILANE À FONCTION CARBAMATE

(30) Priority: 26.07.2022 US 202263392299 P
(43) Date of publication of application: 14.05.2025
(73) Proprietor: DOW GLOBAL TECHNOLOGIES LLC, Midland, MI 48641-1967 (US); Dow Silicones Corporation, Midland, Michigan 48641-1967 (US)
(72) Inventor: KENNEDY, Robert, Midland, Michigan 48640 (US); ZHOU, Xiaoyuan, Midland, Michigan 48686-0994 (US); YU, Decai, Midland, Michigan 48640 (US); JOFFRE, Eric, Midland, Michigan 48686-0994 (US)
(74) Representative: Elkington and Fife LLP
(86) International application number: PCT/US2023/069734
(87) International publication number: WO 2024/026197

(56) References cited:
- US-B2- 10 968 317
- US-B2- 11 168 181

## Description

### CROSS REFERENCE TO RELATED APPLICATIONS

This application claims the benefit of U.S. Provisional Patent Application Serial No. 63/392,299 filed on 26 July 2022 under 35 U.S.C. §119 (e).

### TECHNICAL FIELD

A carbamate-functional alkoxysilalkylenesilane compound and methods for its preparation and use are provided. The compound can be reacted with polyorganosiloxane having a silanol moiety to form a polyalkoxy-functional polyorganosiloxane, which is useful in condensation reaction curable compositions.

### INTRODUCTION

Polyalkoxy-functional polydiorganosiloxanes are useful in moisture curable polyorganosiloxane compositions. Polyalkoxy-functional polyorganosiloxanes can be synthesized by endcapping vinyl-functional polyorganosiloxanes with polyalkoxy-functional hydrogensiloxane oligomers via hydrosilylation reaction as described, for example, in U.S. Patents 10968317, 11098163, 11168181, and 11161939 or PCT Patent Application Publication WO2020-0231755. However, this endcapping process suffers from the drawbacks of relatively high cost and relatively small number of vinyl-functional polyorganosiloxanes that are commercially available, resulting in a limited selection of costly polyalkoxy-functional polyorganosiloxane products.

### SUMMARY

A carbamate-functional alkoxysilalkylenesilane compound is provided.
Methods for the preparation and use of the compound are also provided. The compound can be used in a silylation reaction to cap a silanol moiety of a polyorganosiloxane. The resulting polyalkoxy-functional polyorganosiloxane is useful in condensation reaction curable polyorganosiloxane compositions.

### DETAILED DESCRIPTION

The compound introduced above may comprise formula: 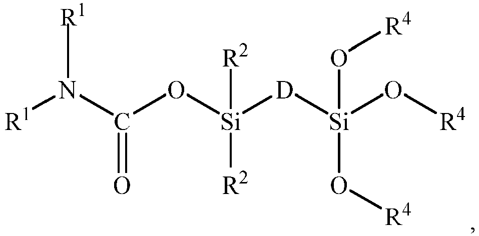 where
each R¹ is independently selected from the group consisting of a hydrogen atom and an alkyl group of 1 to 6 carbon atoms, with the proviso that two instances of R¹ may be bound together to form a cyclic moiety;
each R² is independently selected from the group consisting of alkyl groups and aryl groups;
D is an alkylene group; and
each R⁴ is an independently selected alkyl group of 1 to 6 carbon atoms.

In the formula for the compound, each R¹ may be the same or different. The alkyl group for R¹ has 1 to 6 carbon atoms and is exemplified by methyl, ethyl, propyl (including n-propyl and isopropyl), butyl (including n-butyl, t-butyl, sec-butyl, and isobutyl), pentyl (including n-pentyl and branched saturated hydrocarbon groups of 5 carbon atoms), and hexyl (including n-hexyl and branched saturated hydrocarbon groups of 6 carbon atoms). Alternatively, two instances of R¹ may be bonded together to form a cyclic secondary amine moiety with the nitrogen atom shown in the formula for the compound. Alternatively, each R¹ may be independently selected from the group consisting of hydrogen and alkyl groups of 1 to 4 carbon atoms. Alternatively, each R¹ may be selected from the group consisting of hydrogen, methyl, and ethyl.

In the formula for the compound, each R² may be the same or different. Each R² is independently selected from the group consisting of alkyl groups and aryl groups. The alkyl group may have 1 to 6 carbon atoms and is as described above for the alkyl group for R¹. Suitable aryl groups for R² may have 6 to 12 carbon atoms and are exemplified by phenyl, tolyl, xylyl, and naphthyl; alternatively phenyl. Alternatively, each R² may be an alkyl group of 1 to 6 carbon atoms. Alternatively, each R² may be methyl or ethyl. Alternatively, each R² may be methyl.

In the formula for the compound, D is an alkylene group, which may have 2 to 20 carbon atoms, alternatively 2 to 10 carbon atoms, alternatively 2 to 8 carbon atoms, alternatively 2 to 6 carbon atoms, and alternatively 2 to 4 carbon atoms. Examples include 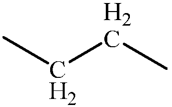 {also drawn: -CH₂-CH₂-}, 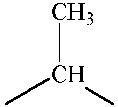 {also drawn: -CH(CH₃)-}, 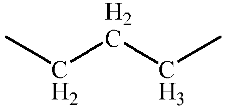 {also drawn: -CH₂-CH₂-CH₂-}, 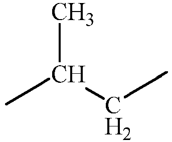 {also drawn -CH(CH₃)-CH₂-}, -CH₂-CH₂-CH₂-CH₂-, -CH₂-CH(CH₃)-CH₂-, and -CH(CH₃)-CH₂-CH₂-. Alternatively, each D may be selected from the group consisting of -CH₂-CH₂- and -CH(CH₃)-.

In the formula for the compound, each R⁴ may be the same or different. Each R⁴ is an independently selected alkyl group. The alkyl group may have 1 to 6 carbon atoms and is as described above for the alkyl group for R². Alternatively, each R⁴ may be an alkyl group of 1 to 4 carbon atoms. Alternatively, each R⁴ may be methyl or ethyl. Alternatively, each R⁴ may be methyl.

### Methods for Making the Compound

The compound described above may be prepared by a method comprising:
1) combining, under conditions to effect reaction, starting materials comprising
   C) a carbamate salt;
   D) a hydridochlorosilane of formula ClSiR²₂H, where R² is as described above; and
   optionally H) the solvent;
      thereby forming a reaction product comprising
   E) a carbamate-functional hydridosilane of formula R¹₂NC(=O)O-SiR²₂H where R¹ and R² are as described above; and
   J) a side product; and
2) combining, under conditions to effect hydrosilylation reaction, starting materials comprising:
   E) the carbamate-functional hydridosilane;
   F) an alkenyl-functional alkoxysilane of formula R³Si(OR⁴)₃, where R³ is an alkenyl group and R⁴ is as described above;
   G) a hydrosilylation reaction catalyst;
   optionally H) the solvent;
   thereby forming a reaction product comprising:
   I) the carbamate-functional alkoxysilalkylenesilane compound described above.

Starting material C), the carbamate salt used in step 1) of the method above, may be commercially available. For example, ammonium carbamate of formula H₂N-C(=O)OH · NH₃ is available from Sigma Aldrich Inc. of St. Louis, Missouri, USA.

Alternatively, the method for preparing the compound may comprise an optional step for forming the carbamate salt. In an optional additional step, starting material A) an amine having a formula selected from the group consisting of R¹₂NH, R¹NH₂, or a combination thereof (where R¹ is as described above) may be used. Suitable amines are known in the art and commercially available. For example, the amine may be a dialkylamine such as diethylamine (HN(CH₂CH₃)₂) or dimethylamine (HN(CH₃)₂). Dialkylamines are commercially available from various sources, such as Sigma Aldrich Inc. of St. Louis, Missouri, USA. Alternatively, the amine may be a monoalkylamine, such as propylamine (H₂NCH₂CH₂CH₃) or butylamine (H₂NCH₂CH₂CH₂CH₃). Alternatively, the amine may be a cyclic secondary amine. Alternatively, a combination of a dialkylamine and a monoalkylamine may be used.

Starting material B) is carbon dioxide of formula CO₂, which is known in the art and commercially available. For example, gaseous CO₂ may be purchased from various sources, such as Air Products and Chemicals of Allentown, Pennsylvania, USA. Solid CO₂ (cardice) may also be purchased from various sources such as EZPro Delivery.

Starting material H) is a solvent that may optionally be used in the method. Solvents that can be used herein are those that help fluidize the starting materials, but essentially do not react with the starting materials. The solvent may be selected based on solubility of the starting materials and volatility of the solvent. The solubility refers to the solvent being sufficient to dissolve and/or disperse a starting material. Volatility refers to vapor pressure of the solvent. The solvent used for preparing the carbamate salt may comprise an aromatic hydrocarbon such as benzene, toluene, ethylbenzene, or xylene; an aliphatic hydrocarbon such as heptane, hexane, or octane; a halogenated hydrocarbon, such as dichloromethane or chloroform; or a combination of two or more thereof. Such solvents are known in the art and are commercially available.

The optional step recited above for forming the carbamate salt may be performed by any convenient means, such as adding the amine, and when present the solvent, into a reaction vessel and bubbling gaseous CO₂ through the vessel, or by adding cardice to a reaction vessel containing the amine, and when present the solvent. The headspace in the reaction vessel may be kept under inert conditions, such as with an inert gas (e.g., nitrogen) during formation of the carbamate salt. The carbamate salt formed may have formula R¹₂NH₂⁺ R¹₂NC(=O)O⁻, where R¹ is as described above. In this method, forming the carbamate salt according to the optional step may be performed before step 1). The amount of B) the carbon dioxide is not critical, but may be a molar excess with respect to A) the amine.

In step 1) of this method, starting materials comprising C) the carbamate salt described above and D) a hydridochlorosilane of formula ClSiR²₂H, where R² is as described above, are combined under conditions to effect reaction of the carbamate salt and the chlorine. Hydridochlorosilanes are known in the art and may be prepared by known methods, such as the Direct Process. Examples of hydridochlorosilanes include dimethylchlorosilane (Me₂HSiCl) and phenylmethylchlorosilane (PhMeHSiCl), which are commercially available from Sigma Aldrich Inc.

Additional solvent may be added in step 1). The solvent in step 1) may be the same as, or different from, the solvent used for forming the carbamate salt, if used. The hydridochlorosilane and the solvent may optionally be combined, e.g., by mixing, before adding the hydridochlorosilane to the carbamate salt in the reaction vessel described above. Step 1) produces a reaction product comprising a carbamate-functional hydridosilane and a side product. The carbamate-functional hydridosilane may have formula R¹₂NC(=O)O-SiR²₂H, where R¹ and R² are as described above.

Step 1) may be performed by mixing starting materials comprising C) the carbamate salt and D) the hydridochlorosilane (and H) the solvent, when present). Mixing may be performed at RT, alternatively with heating to a temperature that will not decompose the carbamate, e.g., ≤ 150 °C. Alternatively, step 1) may be performed with cooling. Step 1) may be performed under inert, dry conditions. Step 1) produces a reaction product comprising E) a carbamate-functional hydridosilane and a side product.. The method may optionally further comprise purifying the reaction product by any convenient means such as filtration, distillation and/or stripping to recover E) the carbamate-functional hydridosilane and remove all or a portion of H) the solvent, if used and/or any side product that may form, such as an alkylammonium chloride of formula R¹₄N⁺ Cl⁻, where R¹ is as described above.

The carbamate-functional hydridosilane, E), produced as described above may have formula R¹₂NC(=O)O-SiR²₂H, where R¹ and R² are as described above. The carbamate-functional hydridosilane is used in step 2) of the method described above, which comprises combining, under conditions to effect hydrosilylation reaction, starting materials comprising: E) the carbamate-functional hydridosilane, F) an alkenyl-functional alkoxysilane, G) a hydrosilylation reaction catalyst, and optionally H) the solvent.

Starting material F) is an alkenyl-functional alkoxysilane that may have formula R³Si(OR⁴)₃, where R³ is an alkenyl group and R⁴ is as described above. Alkenyl-functional alkoxysilanes are known in the art and are commercially available. Examples include vinyltrimethoxysilane, vinyltriethoxysilane, allyltrimethoxysilane, allyltriethoxysilane, hexenyltrimethoxysilane, and hexenyltriethoxysilane, all of which are commercially available, for example, from Gelest, Inc. of Morrisville, Pennsylvania, USA.

In the method described above, the amounts of starting materials E) and F) are not critical, however, starting materials E) and F) may be used in a weight ratio, E)/F), of 1/1 to 1/5, alternatively 1/1 to 1/3.

Starting material G) is a hydrosilylation reaction catalyst. This catalyst will promote a reaction between the alkenyl groups in F) the alkenyl-functional alkoxysilanes and the silicon bonded hydrogen atoms in E) the carbamate-functional hydridosilane. Said catalyst comprises a platinum group metal. The platinum group metal may be selected from the group consisting of platinum, rhodium, ruthenium, palladium, osmium, and iridium. Alternatively, the platinum group metal may be platinum. The hydrosilylation reaction catalyst may be the platinum group metal or a compound or complex of the platinum group metal. For example, the hydrosilylation reaction catalyst may be a compound such as chloridotris(triphenylphosphane)rhodium(I) (Wilkinson's Catalyst), a rhodium diphosphine chelate such as [1,2-bis(diphenylphosphino)ethane]dichlorodirhodium or [1,2-bis(diethylphospino)ethane]dichlorodirhodium, chloroplatinic acid (Speier's Catalyst), chloroplatinic acid hexahydrate, platinum dichloride, or a complex of such a compound with an organopolysiloxane such as 1,3-diethenyl-1,1,3,3-tetramethyldisiloxane complexes with platinum (Karstedt's Catalyst) or Pt(0) complex in tetramethyltetravinylcyclotetrasiloxane (Ashby's Catalyst). Alternatively, the compound or complex may be microencapsulated in a matrix or coreshell type structure. Hydrosilylation reaction catalysts are known in the art, for example, as described in PCT Patent Application Publication WO2021/081822 and the references cited therein. Hydrosilylation reaction catalysts are commercially available, for example, SYL-OFF^{™} 4000 Catalyst and SYL-OFF^{™} 2700 are available from Dow Silicones Corporation of Midland, Michigan, USA.

The amount of G) the hydrosilylation reaction catalyst is sufficient to catalyze hydrosilylation reaction of the silyl hydride moiety of starting material E) and the alkenyl group of starting material F), and the amount depends on various factors including the reaction conditions and species of starting materials E) and F) selected, however the amount may be sufficient to provide the platinum group metal in an amount of at least 5 ppm, alternatively at least 50 ppm, alternatively at least 100 ppm, alternatively at least 200 ppm, and alternatively at least 400 ppm, based on combined weights of starting materials E) and F); while at the same time the amount of G) the hydrosilylation reaction catalyst may be up to 10,000 ppm, alternatively up to 5,000 ppm, alternatively up to 2,000 ppm, alternatively up to 1,000 ppm, alternatively up to 600 ppm, on the same basis.

Starting material H) is a solvent as described above, which may be the same as or different from the solvent used in step 1) and/or in the optional step for forming the carbamate salt. One or more of the starting materials described above for use in step 2) may be dissolved or dispersed in a solvent before combining in step 2). For example, the hydrosilylation reaction catalyst may be dissolved in a hydrocarbon solvent, such as toluene, before use in step 2). The amount of solvent used in step 2) is not critical and may be, for example 0 to 95 weight %, alternatively > 0 weight % to 90 weight %, based on combined weights of starting materials E), F), G), and H).

Step 2) may be performed by any convenient means, such as mixing and heating. The same reaction vessel for step 1) may be used. Alternatively a different reaction vessel may be used. The vessel may be purged with an inert gas such as nitrogen. The starting materials may be added in any order. Alternatively, E) the carbamate-functional hydridosilane and H) a solvent may be added to the reaction vessel. Thereafter, a portion of F) the alkenyl-functional alkoxysilane may be added, and the contents of the vessel may be mixed. Starting material G), the hydrosilylation reaction catalyst may be dissolved in H) the solvent. A portion of the resulting catalyst/solvent solution may be added to the reaction vessel with mixing. Step 2) may be performed at RT. Alternatively, in step 2), the contents of the reaction vessel may be heated, at a temperature up to 150 °C for a time sufficient to complete reaction, alternatively at 70 °C for up to 18 h. Thereafter, one or more additional portions of F) the alkenyl-functional alkoxysilane may be added and the catalyst/solvent solution may be added with mixing and heating. Between additions, volatiles may be removed by any convenient means such as stripping, at RT or with heating and optionally with reduced pressure.

Step 2) produces a hydrosilylation reaction product comprising I) the carbamate-functional alkoxysilalkylenesilane compound described above. The method may optionally further comprise one or more additional steps. For example, I) the compound may be recovered from the hydrosilylation reaction product by any convenient means such as filtration, stripping and/or distillation optionally with heating and/or reduced pressure.

The method described above is illustrated in Scheme 1 and Examples 1 and 2, hereinbelow.

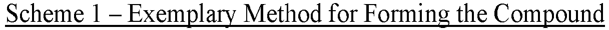

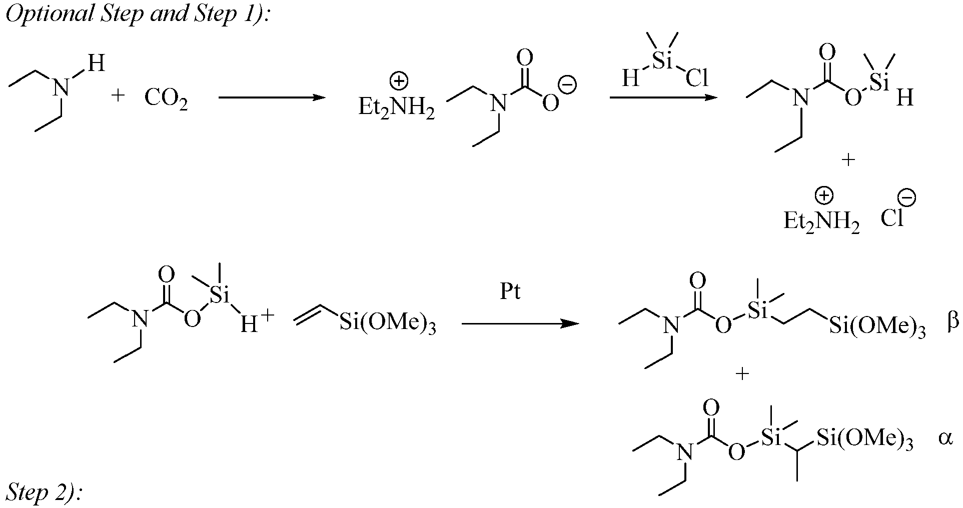

The hydrosilylation reaction product produced by the method described above comprises a combination of compounds with linear and branched linkers (β adduct and α adduct, respectively) represented by D in the formula for the compound shown hereinabove.

Alternatively, the compound shown by the formula hereinabove may be prepared by an alternative method comprising:
1) combining, under conditions to effect hydrosilylation reaction, starting materials comprising
   F) an alkenyl-functional alkoxysilane of formula R³Si(OR⁴)₃, where R³ is an alkenyl group and R⁴ is as described above;
   D) the hydridochlorosilane of formula ClSiR²₂H, where R² is as described above;
   G) the hydrosilylation reaction catalyst; and
   optionally H) the solvent;
      thereby forming a hydrosilylation reaction product comprising
   E') a chlorodialkyl((trialkoxysilyl)alkylene)silane of formula ClSiR²₂-D-Si(OR⁴)₃; where R², D and R⁴ are as described above; and
2) combining, under conditions to effect reaction, starting materials comprising
   E') the chlorodialkyl((trialkoxysilyl)alkylene)silane;
   C) the carbamate salt; and
   optionally H) the solvent;
      thereby forming a reaction product comprising
   I) the carbamate-functional alkoxysilalkylenesilane compound described above, and
   J') a side product.

In this alternative method, C) the carbamate salt may be commercially available, or may be prepared in an optional step in the same manner as described hereinabove. When used in this alternative method, the optional step may be performed before or after step 1). However, step 1) of this alternative method comprises combining, under conditions to effect hydrosilylation reaction, starting materials comprising: F) the alkenyl-functional alkoxysilane, D) the hydridochlorosilane, G) the hydrosilylation reaction catalyst, and optionally H) the solvent, each of which is as described hereinabove. Step 1) may be performed in a different reaction vessel than the optional step of forming the carbamate salt, described above, is used. The starting materials may be added to the vessel in any order. Step 1) may comprise mixing and heating the starting materials. Alternatively, H) the solvent and F) the alkenyl-functional alkoxysilane may be combined in the reaction vessel with mixing. The hydridochlorosilane may be added, followed by a catalyst/solvent solution (prepared as described above). The vessel contents may be mixed, optionally with heating at, e.g., 30 °C, for a time sufficient to effect hydrosilylation reaction, e.g., up to 72 hours. Alternatively, the reaction mixture may be cooled to control the exothermic hydrosilylation reaction. The resulting hydrosilylation reaction product comprises E') a chlorodialkyl((trialkoxysilyl)alkylene)silane. The chlorodialkyl((trialkoxysilyl)alkylene)silane may comprise ClSiR²₂-D-Si(OR⁴)₃; where R², D and R⁴ are as described above. This may be a mixture having both linear and branched linkers, D. The method may optionally further comprise recovering the chlorodialkyl((trialkoxysilyl)alkylene)silane from the hydrosilylation reaction product by any convenient means such as filtration, stripping, and/or distillation with heating and/or reduced pressure.

Step 2) of this alternative method comprises combining, under conditions to effect reaction, starting materials comprising: E') the chlorodialkyl((trialkoxysilyl)alkylene)silane prepared as described above; C) the carbamate salt described above; and optionally H) the solvent. The solvent may be the same as or different from the solvent used in step 1) and/or the optional step, when present. Step 2) may be performed in the same reaction vessel used for step 1) or a different reaction vessel. Step 2) may be performed, for example, by mixing the carbamate salt and the solvent (e.g., benzene) in the reaction vessel. The vessel may be purged with an inert gas, such as nitrogen. The chlorodialkyl((trialkoxysilyl)alkyl)silane may be added, e.g., metered into the reaction vessel intermittently or continuously until all has been added, at RT. The reaction vessel may be heated or cooled to control the exothermic hydrosilylation reaction. The resulting mixture may be stirred for a period of time at RT to complete the reaction, e.g., up to 18 hours. The reaction product of step 2) comprises I) the carbamate-functional alkoxysilalkylenesilane compound and K) a side product. The method may further comprise one or more additional steps, such as recovering the compound from the reaction product by any convenient means such as filtration, stripping, and/or distillation at RT or elevated temperature, optionally with reduced pressure.

This alternative method is illustrated below in Scheme 2 and Examples 1, 4, and 5, herein below.

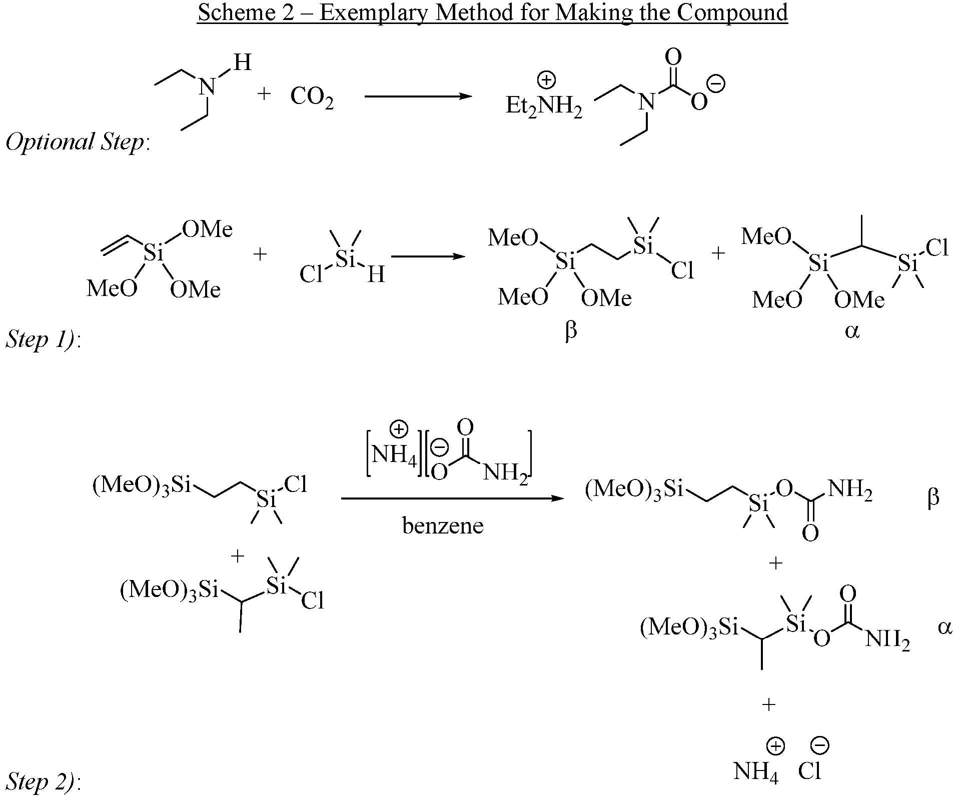

The reaction product produced by the alternative method described above comprises a combination of compounds with linear and branched linkers (β adduct and α adduct, respectively) represented by D in the formula for the compound shown hereinabove.

### Preparing a Polyalkoxy-functional Polyorganosiloxane using the Compound

The compound described above is useful in a silylation reaction for capping a silanol moiety. A method for capping a silanol moiety of a polyorganosiloxane comprises: *1)* combining, under conditions to effect silylation reaction, starting materials comprising: I) the compound of the formula above; and II) a polyorganosiloxane having a silanol moiety. This method may further comprise preparing I) the compound by practicing a method described above before step *1).* This method produces a reaction product comprising a polyalkoxy-functional polyorganosiloxane.

The polyorganosiloxane having the silanol moiety, II), is not specifically restricted, provided that II) the polyorganosiloxane has, per molecule, at least one silicon bonded (HO_{1/2}) group capable of a capping reaction with the carbamate functionality of I) the compound. The polyorganosiloxane may be linear, branched, cyclic, or resinous. The polyorganosiloxane may comprise unit formula: (R⁵₃SiO_{1/2})ₐ(R⁵₂SiO_{2/2})_{b}(R⁵SiO_{3/2})_{c}(SiO_{4/2})_{d}(HO_{1/2})ₑ, where each R⁵ is independently selected from the group consisting of a monovalent hydrocarbyl group (e.g., alkyl, alkenyl, and aryl) and a monovalent halogenated hydrocarbyl group (e.g., haloalkyl, haloalkenyl, and haloaryl); subscripts a, b, c, d, and e represent average numbers of each unit per molecule and have values such that a ≥ 0, b ≥ 0, c ≥ 0, d ≥ 0, and e ≥ 1, and 2 ≤ (a + b + c + d) ≤ 10,000. Alternatively, the subscripts may have values such that 2 ≤ (a + b + c + d) ≤ 2,000; alternatively 2 ≤ (a + b + c + d) ≤ 1,000. Suitable alkyl groups for R⁵ are as described and exemplified above for R². Suitable aryl groups for R⁵ are as described and exemplified above for R². Suitable alkenyl groups for R⁵ are as described and exemplified above for R³. The monovalent halogenated hydrocarbyl groups are monovalent hydrocarbyl groups, as described above, except that at least one hydrogen atom has been formally replaced with a halogen atom. For example, haloalkyl groups include chloromethyl and fluoromethyl. Alternatively, each R⁵ may be an alkyl group such as methyl or ethyl, or an aryl group such as phenyl. Alternatively, each R⁵ may be selected from methyl and phenyl. Alternatively, each R⁵ may be methyl.

Alternatively, II) the polyorganosiloxane having the silanol moiety may be a polydiorganosiloxane, such as bis-hydroxyl-terminated polydiorganosiloxane (e.g., where in the unit formula above a = c = d = 0, b > 1, and e = 2) of formula 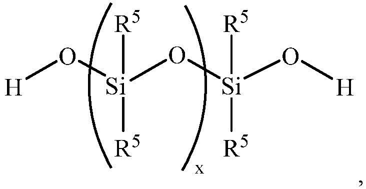 where R⁵ is as described above and subscript x represents degree of polymerization and has an average value of 1 to 2,000, alternatively 1 to 1,000. Alternatively, each R⁵ may be independently selected from the group consisting of alkyl groups, alkenyl groups, and aryl groups. Alternatively, each R⁵ may be an alkyl group such as methyl or ethyl, or an aryl group such as phenyl. Alternatively, each R⁵ may be selected from methyl and phenyl. Alternatively, each R⁵ may be methyl. The bis-hydroxyl-terminated polydiorganosiloxane is exemplified by
i) bis-hydroxyl-terminated polydimethylsiloxane,
ii) bis-hydroxyl-terminated poly(dimethylsiloxane/methylphenylsiloxane),
iii) bis-hydroxyl-terminated poly(dimethylsiloxane/diphenylsiloxane), or
iv) a combination of two or more of i) to iii).

Suitable polyorganosiloxanes having the silanol moiety are known in the art and are commercially available. For example, polyorganosiloxane resins with various silanol contents are available from The Dow Chemical Company of Midland, Michigan, USA, as described, for example, in the Silicone resins and intermediates Selection guide at Silicone Resins and Intermediates Selection Guide (dow.com). Polydiorganosiloxanes with silanol moieties are also available from The Dow Chemical Company of Midland, Michigan, USA, under the tradename XIAMETER^{™} OHX Polymers. Examples are described, for example, in the XIAMETER Brand Sealant Formulation Materials for North America (dow.com).

Capping the silanol moiety of the polyorganosiloxane with the compound produces a polyalkoxy-functional polyorganosiloxane. For example, the capped polyorganosiloxane may comprise unit formula: (R⁵₃SiOu₂)ₐ(R⁵₂SiO_{2/2})_{b}(R⁵SiO_{3/2})_{c}(SiO_{4/2})_{d}R⁶ₑ, where R⁶ is a group of formula 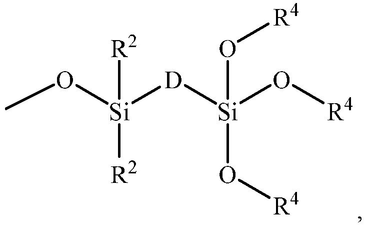 where R², D, R⁴, R⁵, and subscripts a, b, c, d, and e are as described above.

When the bis-hydroxyl-terminated polydiorganosiloxane is capped, the resulting polyalkoxy-functional polyorganosiloxane comprises formula: 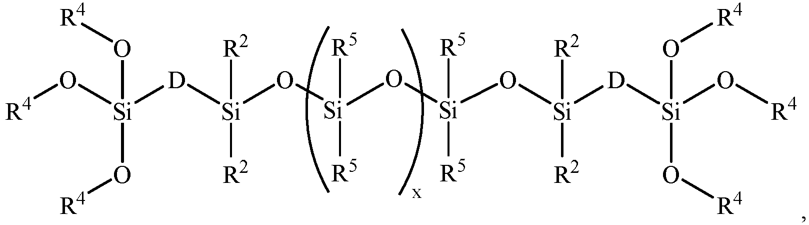 where subscript x and R⁵, R², D, and R⁴ are as described above. The polyalkoxy-functional polyorganosiloxane described above may be useful, e.g., as a crosslinker, in moisture curable polyorganosiloxane compositions.

### EXAMPLES

The following examples are provided to illustrate the invention to one skilled in the art and are not to be interpreted as limiting the scope of the invention set forth in the claims. Starting materials used in the examples are described in Table 1.

**Table 1 - Starting Materials**

| Starting Material | Description | Source |
|---|---|---|
| Alumina | Alumina | Sigma-Aldrich, Inc. St. Louis, MO, USA |
| H₂NC(=O)O | Ammonium Carbamate | Alfa Aesar, Tewksbury, MA, USA |
| Benzene | Benzene | Sigma-Aldrich, Inc. St. Louis, MO, USA |
| ClSiMe₂H | Dimethylchlorosilane | Sigma-Aldrich, Inc. St. Louis, MO, USA |
| CO₂ | Cardice (solid carbon dioxide) | EZPro Delivery |
| DCM | dichloromethane | Thermo Fisher Scientific, Waltham, MA, USA |
| DMDC | Dimethylammonium dimethylcarbamate | Sigma-Aldrich, Inc. St. Louis, MO, USA |
| Et₂NH | Diethyl amine | Sigma-Aldrich, Inc. St. Louis, MO, USA |
| Hexane | Hexane | Thermo Fisher Scientific, Waltham, MA, USA |
| Karstedt's Catalyst | Platinum - vinyl/methylsiloxane complex | TDCC |
| PDMS-OH | Bis-hydroxyl-terminated polydimethylsiloxane with DP of 612 and viscosity of 13,500 cSt | TDCC |
| Toluene | Toluene | Thermo Fisher Scientific, Waltham, MA, USA |
| VTMOS | Vinyltrimethoxysilane | Sigma-Aldrich, Inc. St. Louis, MO, USA |

### Example 1 - Synthesis of O-dimethylsilyl-N,N-diethylcarbamate

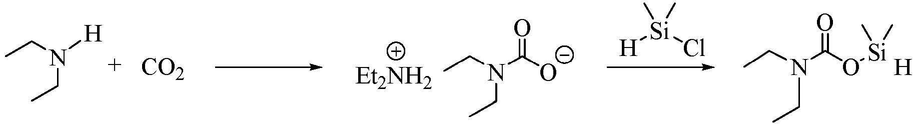

To a dry 250 mL round-bottom flask, cooled in an ice bath, was added through a rubber septum, under positive N₂ pressure and with stirring, dichloromethane (100 mL) and diethylamine (16.9 mL, 12.0 g, 164 mmol, 2.0 equiv.). To the mixture was cautiously added solid CO₂, until the solution was saturated, followed by a solution of dimethylchlorosilane (10.0 mL, 8.52 g, 90.0 mmol, 1.1 equiv.) in dichloromethane (10 mL) via syringe over 10 minutes. CO₂ was periodically added over the following 30 minutes, then the mixture was allowed to warm to room temperature. The mixture was quickly filtered through a disposable frit and the dichloromethane was removed at ambient temperature under reduced pressure. The residue was dissolved in hexane and filtered through a disposable frit. The hexane was removed under reduced pressure to give a crystalline white solid (11.94 g, 68.1 mmol, 83%). ¹H NMR analysis confirmed the presence of *O*-dimethylsilyl-*N,N*-diethylcarbamate.

### Example 2 - Synthesis of dimethyl(2-(trimethoxysilyl)ethyl)silyl diethylcarbamate (ETM-carbamate-NEt₂)

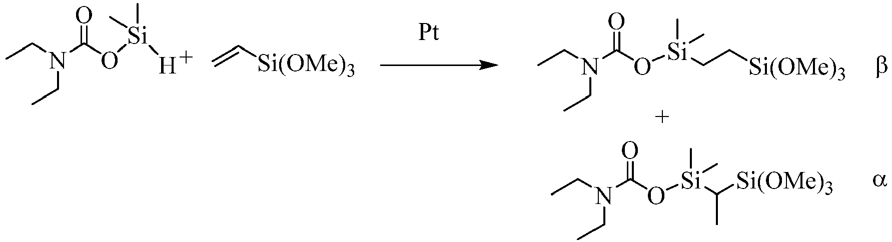

The following procedure was conducted in a dry, nitrogen-purged glove box. To a dry 40 mL vial was added O-dimethylsilyl-N,N-diethylcarbamate (2.60 g, 14.8 mmol) and dry toluene (25 mL). To the solution was added vinyltrimethoxysilane (1.25 mL, 8.15 mmol, 0.55 equiv.) and the mixture was stirred (magnetic stirrer). A solution of Karstedt's catalyst in toluene ("Pt solution", 2.5 wt% Pt, 10.4 µL) was added. The mixture was stirred at 70°C for 3 h, and the progress of the reaction was monitored via gas chromatography. A second portion of vinyltrimethoxysilane (1.25 mL, 8.15 mmol, 55 equiv.) was then added, and the mixture was stirred at 70°C for 18 h. An additional volume of Pt solution (10.4 µL) was added, and the mixture was stirred at 70°C for 6 h. An additional volume of Pt solution (10.4 µL) was added, and the mixture was stirred at 70°C for 18 h. Volatiles were removed under reduced pressure at RT. ¹H NMR, ¹³C NMR, and GC showed a clean reaction to form a ca. 9:1 mixture of β/a hydrosilylation products (dimethyl(2-(trimethoxysilyl)ethyl)silyl diethylcarbamate), with ca. 15-25% unreacted dimethylhydridosilyl diethylcarbamate.

### Preparation Example 3 - Synthesis of Chlorodimethyl((trimethoxysilyl)ethyl)silane

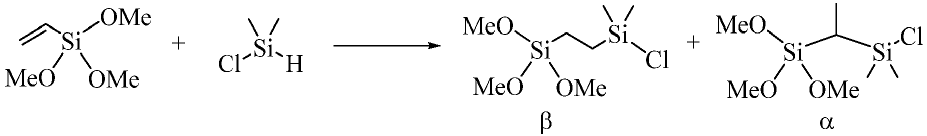

The following procedure was conducted in a dry, nitrogen-purged glove box. A dry 250 mL round-bottom flask was charged with dry toluene (100 mL) and vinyltrimethoxysilane (8.3 mL, 8.0 g, 54 mmol). To the stirring solution was added dimethylchlorosilane (6.6 mL, 5.6 g, 59 mmol, 1.1 equiv.) followed by a solution of Karstedt's catalyst in toluene (2.5 wt% Pt, 22.5 µL). The mixture was stirred at 30°C for 72 hours and then filtered through a pad of alumina. The toluene was removed under reduced pressure at ambient temperature. ¹H and ¹³C NMR spectroscopy and GC showed no residual vinyltrimethoxysilane or dimethylchlorosilane and confirmed the product contained ca 14 wt% toluene. and was a mixture of the β addition product (86%) and α addition product (14%). Mass of product was 15.0 g (12.6 g at 84 wt%, 51.9 mmol, 96%).

### Example 4 - Synthesis of dimethyl(2-(trimethoxysilyl)ethyl)silyl dimethylcarbamate (ETM-carbamate-NMe₂)

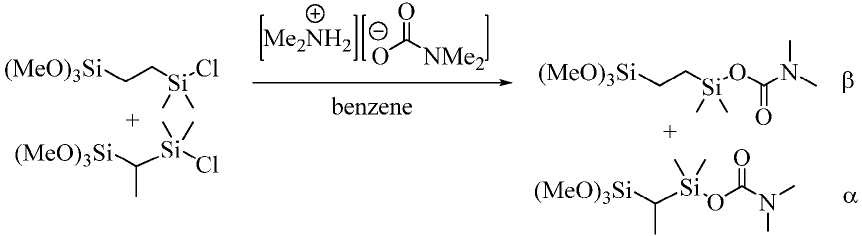

The following procedure was conducted in a dry, nitrogen-purged glove box. To a stirring solution of dimethylammonium dimethylcarbamate (1.4 mL, 11.0 mmol, 1.3 equiv.) in dry benzene (20 mL) in dry 40 mL vial at ambient temperature was added, dropwise over ca. 2 minutes, neat chlorodimethyl(2-(trimethoxysilyl)ethyl)silane with a purity of 84% prepared as described in Example 3 (2.5 mL, 8.44 mmol). The mixture was stirred for 18 h. The mixture was filtered, and the filtrate was placed under vacuum to give a pale brown liquid. The liquid was diluted with hexanes (8 mL) and filtered through a 0.45 µm PTFE filter. The filtrate was placed under vacuum to give a colorless liquid, and ¹H NMR confirmed the presence of dimethyl(2-(trimethoxysilyl)ethyl)silyl dimethylcarbamate as a mixture of β and α addition products.

### Example 5 - Synthesis of Dimethyl(2-(trimethoxysilyl)ethyl)silyl carbamate (ETM-carbamate-NH₂)

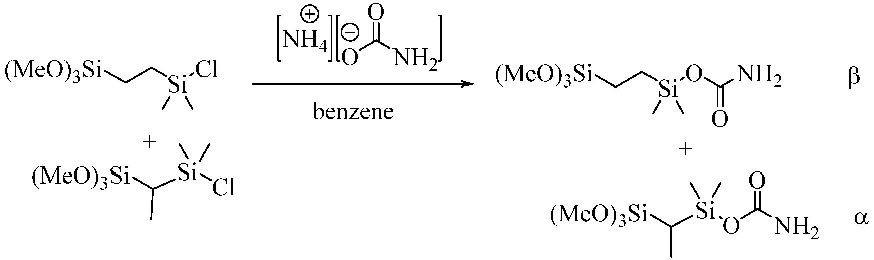

The following procedure was conducted in a dry, nitrogen-purged glove box. To a vigorous stirring suspension of ammonium carbamate (1.002 g, 12.8 mmol, 1.5 equiv.) in dry benzene (20 mL) in a 80 mL glass jar at ambient temperature was added via a syringe, dropwise over 2 minutes, chlorodimethyl(2-(trimethoxysilyl)ethyl)silane with a purity of 84% (ca. 2.5 mL, 2.44 g, 2.05 g at 84 wt% purity, 8.44 mmol) prepared in Example 3. After stirring at ambient temperature for 1 h, the mixture was filtered through a glass frit. The filtrate was placed under vacuum to give a pale brown oil, and ¹H NMR confirmed the presence of dimethyl(2-(trimethoxysilyl)ethyl)silyl carbamate (1.70 g, 6.34 mmol, 75%).

### Example 6 - Capping Hydroxyl-Terminated Polydimethylsiloxane

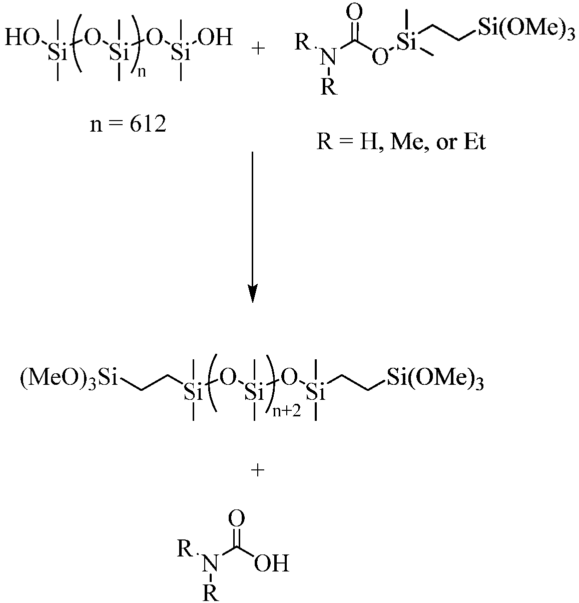

A dental cup was charged with PDMS-OH and a capping agent prepared as described above in one of Examples 2, 4, and 5. After mixing on a speedmixer for 5 min, the reaction mixture was kept at room temperature in a closed container or under vacuum. The reaction progress was monitored by proton ¹H NMR through the disappearance of SiOH moiety. When the reaction was complete, formation of the bis-trialkoxy-terminated PDMS was confirmed by ²⁹Si NMR. Viscosity of the capped polydimethylsiloxane was measured by ARES rheometer (25 mm parallel cone and plate, Cone angle 0.0999 radians, Gap 0.0508 mm, The test is a steady rate sweep from 0.1 to 10 1/s with 10 points per decade).

| Capping agent | Reaction time (h) | SiOH Conversion | Viscosity (mm²/s, cSt) | Viscosity change |
|---|---|---|---|---|
| ETM-carbamate-NEt₂ (Example 2) | 1 | >95% | 28,000 | 2.1x |
| ETM-carbamate-NMe₂ (Example 4) | 1 | 60% | 83,000 | 6.1x |
| ETM-carbamate-NH₂ (Example 5) | 20 | 73% | 13,000 | 1x |

| | | | | |
|---|---|---|---|---|
| 1 mm²/s and 1 cSt are equivalent to 1 mPa.s. | | | | |

### INDUSTRIAL APPLICABILITY

The examples above show that a carbamate-functional alkoxysilalkylenesilane compound can be successfully prepared by the method described herein. The examples further show that the compound can successfully be used to cap silanol moieties of a polyorganosiloxane. These examples indicate that a wide range of polyalkoxy-functional polyorganosiloxanes can be prepared using the carbamate-functional polyalkoxysilylalkylenesilane compound of this invention to cap different commercially available silanol-functional polyorganosiloxanes due to the ready availability of various polyorganosiloxanes with silanol moieties, which may be, e.g., linear, branched, or resinous. The carbamate-functional alkoxysilylalkylenesilane compound undergoes silylation reaction to cap silanol moieties with one or more of the following benefits: the reaction proceeds without the addition of a catalyst, at RT, with no or relatively low viscosity increase; and the product may be clear (not hazy).

### DEFINITIONS AND USAGE OF TERMS

Unless otherwise indicated by the context of the specification: all amounts, ratios, and percentages herein are by weight; the articles 'a', 'an', and 'the' each refer to one or more; and the singular includes the plural. The terms "comprising" or "comprise" are used herein in their broadest sense to mean and encompass the notions of "including," "include," "consist(ing) essentially of," and "consist(ing) of. The use of "for example," *"e.g.,"* "such as," and "including" to list illustrative examples does not limit to only the listed examples. Thus, "for example" or "such as" means "for example, but not limited to" or "such as, but not limited to" and encompasses other similar or equivalent examples.

"Yield" means molar amount carbamate-functional alkoxysilylalkylenesilane compound produced / molar amount carbamate-functional alkoxysilylalkylenesilane compound possible based on the amount of limiting reagent. "Selectivity" means the ratio of linear isomer/branched isomer of the carbamate-functional alkoxysilylalkylenesilane compound (where isomers have the same molecular weight).

The abbreviations used herein have the definitions in Table 4.

**Table 4 - Abbreviations**

| Abbreviation | Definition |
|---|---|
| acac | acetylacetonate |
| °C | Degrees Celsius |
| DP | Degree of polymerization |
| Et | ethyl |
| ETM- | A moiety of formula: |
| | 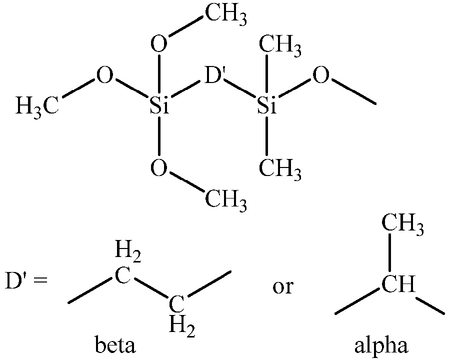 |
| g | gram |
| GC | Gas chromatography |
| h | hour |
| m | meter |
| Me | methyl |
| min | minute |
| mL | milliliter |
| mm | millimeter |
| mmol | millimole |
| N | Normal |
| NMR | Nuclear Magnetic Resonance |
| PDMS | polydimethylsiloxane |
| rpm | revolutions per minute |
| rpm | revolutions per minute |
| RT | room temperature of 23 °C +/- 2 °C |
| sec | seconds |
| TDCC | The Dow Chemical Company of Midland, Michigan, USA |
| µL | microliters |
| Vi | vinyl |
| VTMOS | Vinyltrimethoxysilane |
| wt | weight |

### Test Methods

The GC test methods used in this application were performed as follows: Chromatograms were recorded using two methods. (1) (The chromatographic equipment consisted of a Hewlett Packard 5890 Series II GC equipped with a flame ionization detector and Hewlett Packard 6890 Series Autoinjector. The separation was made with a 30m HP-5 column, with 78 mL/min helium flow and 1.05 mL/min column flow. The samples were prepared as 100 µL in 1 mL dichloromethane. An injection volume of 2 µL was used, with an injector temperature of 180 °C and a detector temperature of 300 °C, and data was collected for 36.33 minutes. The oven method consisted of holding an initial temperature of 40 °C for 1 minute, followed by a ramp of 5 °C/min to 150 °C, a ramp of 15 °C/min to 275 °C, ending with holding the final temperature of 275 °C for 5 minutes.) (2). Agilent Technologies 7896A GC system fitted with a 7693 autosampler and connected to a 5975C mass spectrometer. Column: Agilent DB-5MS (phenyl-arylene, 30 m × 250 µm × 0.25 µm). Inlet temp: 250°C. Oven program: 50°C for 1 min; 10°C/min to 275°C; 275°C for 5 min. Total run time: 28.5 min. Mass spectrometer operated in chemical ionization mode / positive ion mode with methane as the reagent gas. Mass range: 50-1000. Solvent delay: 3.5 min.

The NMR test methods used in this application were performed as follows: (Proton (¹H) and ¹³C nuclear magnetic resonance (NMR) spectra were recorded on Agilent 500-MR or Varian NMR spectrometer operating at 500 MHz. Carbon (¹³C) and silicon (²⁹Si) NMR spectra were recorded on an Agilent 500 MHz DD2 system with a 16mm silicon free AutoZ probe. Peak frequencies are recorded in ppm. ¹H samples were run with 100 µL sample in 1 mL deuterated chloroform (CDCl₃) or benzene (C₆D₆), while ²⁹Si and ¹³C samples were run with 2 mL sample in 3 mL deuterated chloroform with Cr(acac)₃.) The ¹H NMR spectra were referenced internally to residual protons in the deuterated solvents. The ¹³C NMR spectra were referenced internally to the deuterated solvent.

## Claims

1. A carbamate-functional alkoxysilalkylenesilane compound comprising formula: 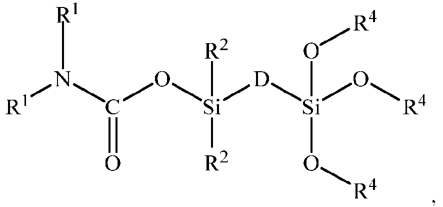 where
each R¹ is independently selected from the group consisting of a hydrogen atom and an alkyl group of 1 to 6 carbon atoms, with the proviso that two instances of R¹ may be bonded together to form a cyclic secondary amine moiety;
each R² is independently selected from the group consisting of alkyl groups and aryl groups;
D is an alkylene group; and
each R⁴ is an independently selected alkyl group of 1 to 6 carbon atoms.

2. The compound of claim 1, where each R¹ is selected from the group consisting of hydrogen, methyl, and ethyl.

3. The compound of claim 1 or claim 2, where each R² is methyl.

4. The compound of any one of claims 1 to 3, where each D is selected from the group consisting of

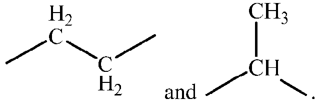

5. The compound of any one of claims 1 to 4, where each R⁴ is methyl.

6. A method for preparing the carbamate-functional alkoxysilalkylenesilane compound of any one of claims 1 to 5, wherein the method comprises:
1) combining, under conditions to effect reaction, starting materials comprising:
C) a carbamate salt; and
D) a hydridochlorosilane of formula ClSiR²₂H, where R² is as described above; thereby forming a reaction product comprising
E) a carbamate-functional hydridosilane of formula R¹₂NC(=O)O-SiR²₂H where R¹ and R² are as described above; and
2) combining, under conditions to effect hydrosilylation reaction, starting materials comprising:
E) the carbamate-functional hydridosilane;
F) an alkenyl-functional alkoxysilane of formula R³Si(OR⁴)₃, where R³ is an alkenyl group and R⁴ is as described above;
G) a hydrosilylation reaction catalyst;
optionally H) a solvent;
thereby forming a hydrosilylation reaction product comprising:
I) the carbamate-functional alkoxysilalkylenesilane compound, and
J) a side product.

7. The method of claim 6, where each R¹ is a methyl group or an ethyl group.

8. A method for preparing the carbamate-functional alkoxysilalkylenesilane compound of any one of claims 1 to 5, wherein the method comprises:
1) combining, under conditions to effect hydrosilylation reaction, starting materials comprising
F) an alkenyl-functional alkoxysilane of formula R³Si(OR⁴)₃, where R³ is an alkenyl group and R⁴ is as described above;
D) a hydridochlorosilane of formula ClSiR²₂H, where R² is as described above;
G) a hydrosilylation reaction catalyst; and
optionally H) a solvent;
thereby forming a hydrosilylation reaction product comprising
E') a chlorodialkyl((trialkoxysilyl)alkylene)silane comprising formula ClSiR²₂-D-Si(OR⁴)₃; where R², D and R⁴ are as described above; and
2) combining, under conditions to effect reaction, starting materials comprising
E') the chlorodialkyl((trialkoxysilyl)alkylene)silane;
C) a carbamate salt; and
optionally H) a solvent;
thereby forming a reaction product comprising
I) the carbamate-functional alkoxysilalkylenesilane compound, and
J') a side product.

9. The method of claim 8, where each R¹ is a hydrogen atom.

10. A method for preparing a polyalkoxy-functional polyorganosiloxane, wherein the method comprises:
i) practicing the method of any one of claims 6 to 9, thereby forming I) the carbamate-functional alkoxysilalkylenesilane compound;
ii) combining, under conditions to effect capping reaction, starting materials comprising
I) the carbamate-functional alkoxysilalkylenesilane compound; and
II) a polyorganosiloxane having a silanol moiety.

11. A method for preparing a polyalkoxy-functional polyorganosiloxane, wherein the method comprises:
1) combining, under conditions to effect capping reaction, starting materials comprising:
I) the carbamate-functional alkoxysilalkylenesilane compound of any one of claims 1 to 5; and
II) a polyorganosiloxane having a silanol moiety.

12. The method of claim 10 or claim 11, where II) the polyorganosiloxane is a bis-hydroxyl-terminated polydiorganosiloxane of formula 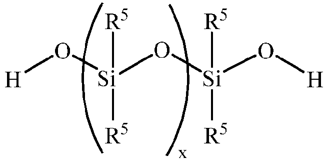 where each R⁵ is independently selected from the group consisting of alkyl groups, alkenyl groups, and aryl groups, and subscript x represents degree of polymerization and has an average value of 1 to 2,000.

13. The method of claim 12, where the bis-hydroxyl-terminated polydiorganosiloxane is bis-hydroxyl-terminated polydimethylsiloxane.

14. A polyalkoxy-functional polyorganosiloxane prepared by the method of claim 12, where the polyalkoxy-functional polyorganosiloxane comprises formula: 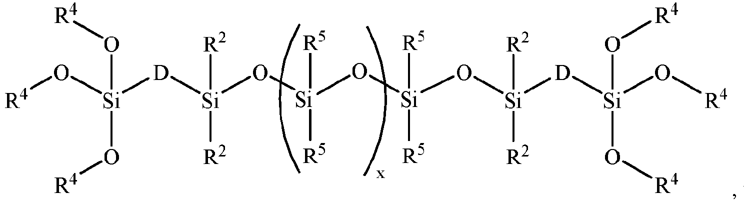 where subscript x and R⁵, R², D, and R⁴ are as described above.

15. Use of the polyalkoxy-functional polyorganosiloxane of claim 14 in a condensation reaction curable polyorganosiloxane composition.

## Patentansprüche

1. Carbamatfunktionelle Alkoxysilalkylensilanverbindung, umfassend die Formel: 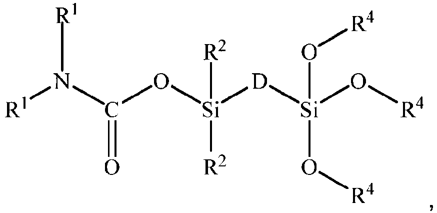 wobei
jedes R¹ unabhängig aus der Gruppe ausgewählt ist, bestehend aus einem Wasserstoffatom und einer Alkylgruppe mit 1 bis 6 Kohlenstoffatomen, mit der Maßgabe, dass zwei Instanzen von R¹ aneinander gebunden sein können, um einen zyklischen sekundären Aminrest auszubilden;
jedes R² unabhängig aus der Gruppe ausgewählt ist, bestehend aus Alkylgruppen und Arylgruppen;
D eine Alkylengruppe ist; und
jedes R⁴ eine unabhängig ausgewählte Alkylgruppe mit 1 bis 6 Kohlenstoffatomen ist.

2. Verbindung nach Anspruch 1, wobei jedes R¹ aus der Gruppe ausgewählt ist, bestehend aus Wasserstoff, Methyl und Ethyl.

3. Verbindung nach Anspruch 1 oder 2, wobei jedes R² Methyl ist.

4. Verbindung nach einem der Ansprüche 1 bis 3, wobei jedes D aus der Gruppe ausgewählt ist, bestehend aus

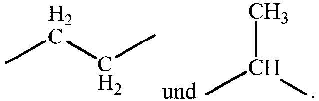

5. Verbindung nach einem der Ansprüche 1 bis 4, wobei jedes R⁴ Methyl ist.

6. Verfahren zum Herstellen der carbamatfunktionellen Alkoxysilalkylensilanverbindung nach einem der Ansprüche 1 bis 5, wobei das Verfahren umfasst:
1) Kombinieren, unter Bedingungen, die eine Reaktion bewirken, von Ausgangsmaterialien, umfassend:
C) ein Carbamatsalz; und
D) ein Hydridochlorosilan der Formel ClSiR²₂H, wobei R² wie vorstehend beschrieben ist; wodurch ein Reaktionsprodukt ausgebildet wird, umfassend
E) ein carbamatfunktionelles Hydridosilan der Formel R¹₂NC(=O)O-SiR²₂H, wobei R¹ und R² wie vorstehend beschrieben sind; und
2) Kombinieren, unter Bedingungen, die eine Hydrosilylierungsreaktion bewirken, von Ausgangsmaterialien, umfassend
E) das carbamatfunktionelle Hydridosilan;
F) ein alkenylfunktionelles Alkoxysilan der Formel R³Si(OR⁴)₃, wobei R³ eine Alkenylgruppe ist und R⁴ wie vorstehend beschrieben ist;
G) einen Hydrosilylierungsreaktionskatalysator;
optional H) ein Lösungsmittel;
wodurch ein Hydrosilylierungsreaktionsprodukt ausgebildet wird, umfassend:
I) die carbamatfunktionelle Alkoxysilalkylensilanverbindung, und
J) ein Nebenprodukt.

7. Verfahren nach Anspruch 6, wobei jedes R¹ eine Methylgruppe oder eine Ethylgruppe ist.

8. Verfahren zum Herstellen der carbamatfunktionellen Alkoxysilalkylensilanverbindung nach einem der Ansprüche 1 bis 5, wobei das Verfahren umfasst:
1) Kombinieren, unter Bedingungen, die eine Hydrosilylierungsreaktion bewirken, von Ausgangsmaterialien, umfassend
F) ein alkenylfunktionelles Alkoxysilan der Formel R³Si(OR⁴)₃, wobei R³ eine Alkenylgruppe ist und R⁴ wie vorstehend beschrieben ist;
D) ein Hydridochlorosilan der Formel ClSiR²₂H, wobei R² wie vorstehend beschrieben ist;
G) einen Hydrosilylierungsreaktionskatalysator; und
optional H) ein Lösungsmittel;
wodurch ein Hydrosilylierungsreaktionsprodukt ausgebildet wird, umfassend
E') ein Chlorodialkyl((trialkoxysilyl)alkylen)silan, umfassend die Formel ClSiR²₂-D-Si(OR⁴)₃; wobei R², D und R⁴ wie vorstehend beschrieben sind; und
2) Kombinieren, unter Bedingungen, die eine Reaktion bewirken, von Ausgangsmaterialien, umfassend
E') das Chlorodialkyl((trialkoxysilyl)alkylen)silan;
C) ein Carbamatsalz; und
optional H) ein Lösungsmittel;
wodurch ein Reaktionsprodukt ausgebildet wird, umfassend
I) die carbamatfunktionelle Alkoxysilalkylensilanverbindung, und
J') ein Nebenprodukt.

9. Verfahren nach Anspruch 8, wobei jedes R¹ ein Wasserstoffatom ist.

10. Verfahren zum Herstellen eines polyalkoxyfunktionellen Polyorganosiloxans, wobei das Verfahren umfasst:
i) Durchführen des Verfahrens nach einem der Ansprüche 6 bis 9, wodurch I) die carbamatfunktionelle Alkoxysilalkylensilanverbindung ausgebildet wird;
ii) Kombinieren, unter Bedingungen, die eine Verkappungsreaktion bewirken, von Ausgangsmaterialien, umfassend
I) die carbamatfunktionelle Alkoxysilalkylensilanverbindung; und
II) ein Polyorganosiloxan, das einen Silanolrest aufweist.

11. Verfahren zum Herstellen eines polyalkoxyfunktionellen Polyorganosiloxans, wobei das Verfahren umfasst:
1) Kombinieren, unter Bedingungen, die eine Verkappungsreaktion bewirken, von Ausgangsmaterialien, umfassend:
I) die carbamatfunktionelle Alkoxysilalkylensilanverbindung nach einem der Ansprüche 1 bis 5; und
II) ein Polyorganosiloxan, das einen Silanolrest aufweist.

12. Verfahren nach Anspruch 10 oder 11, wobei II) das Polyorganosiloxan ein bis-hydroxyl-terminiertes Polydiorganosiloxan der Formel 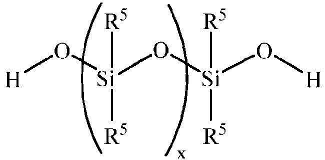 ist, wobei jedes R⁵ unabhängig ausgewählt ist aus der Gruppe, bestehend aus Alkylgruppen, Alkenylgruppen und Arylgruppen, und der Index x den Polymerisationsgrad darstellt und einen durchschnittlichen Wert von 1 bis 2.000 aufweist.

13. Verfahren nach Anspruch 12, wobei das bis-hydroxyl-terminierte Polydiorganosiloxan bis-hydroxyl-terminiertes Polydimethylsiloxan ist.

14. Polyalkoxyfunktionelles Polyorganosiloxan, hergestellt durch das Verfahren nach Anspruch 12, wobei das polyalkoxyfunktionelle Polyorganosiloxan die Formel umfasst: 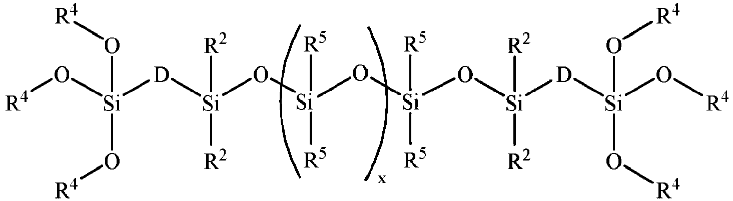 wobei Index x und R⁵, R², D und R⁴ wie vorstehend beschrieben sind.

15. Verwendung des polyalkoxyfunktionellen Polyorganosiloxans nach Anspruch 14 in einer durch Kondensationsreaktion härtbaren Polyorganosiloxanzusammensetzung.

## Revendications

1. Composé alcoxysilalkylènesilane à fonctionnalité carbamate comprenant la formule : 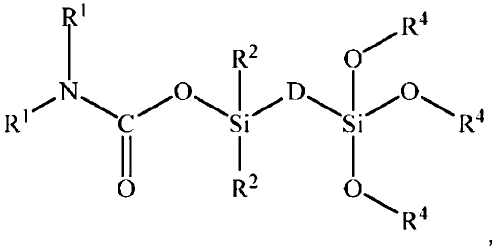 où
chaque R¹ est choisi indépendamment dans le groupe constitué d'un atome d'hydrogène et d'un groupe alkyle de 1 à 6 atomes de carbone, à condition que deux instances de R¹ puissent être liées ensemble pour former un fragment amine secondaire cyclique ;
chaque R² est choisi indépendamment dans le groupe constitué de groupes alkyle et groupes aryle ;
D est un groupe alkylène ; et
chaque R⁴ est un groupe alkyle choisi indépendamment de 1 à 6 atomes de carbone.

2. Composé selon la revendication 1, où chaque R¹ est choisi dans le groupe constitué d'hydrogène, méthyle, et éthyle.

3. Composé selon la revendication 1 ou la revendication 2, où chaque R² est méthyle.

4. Composé selon l'une quelconque des revendications 1 à 3, où chaque D est choisi dans le groupe constitué

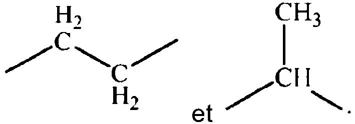

5. Composé selon l'une quelconque des revendications 1 à 4, où chaque R⁴ est méthyle.

6. Procédé de préparation du composé alcoxysilalkylènesilane à fonctionnalité carbamate selon l'une quelconque des revendications 1 à 5, dans lequel le procédé comprend :
1) la combinaison, dans des conditions permettant d'obtenir une réaction, de matières premières comprenant :
C) un sel de carbamate ; et
D) un hydridochlorosilane de formule ClSiR²₂H, où R² est tel que décrit ci-dessus ; permettant ainsi de former un produit de réaction comprenant
E) un hydridosilane à fonctionnalité carbamate de formule R¹₂NC(=O)O-SiR²_{2H} où R¹ et R² sont tels que décrits ci-dessus ; et
2) la combinaison, dans des conditions permettant d'obtenir une réaction, de matières premières comprenant :
E) l'hydridosilane à fonctionnalité carbamate ;
F) un alcoxysilane à fonctionnalité alcényle de formule R³Si(OR⁴)₃, où R³ est un groupe alcényle et R⁴ est tel que décrit ci-dessus ;
G) un catalyseur de réaction d'hydrosilylation ;
facultativement H) un solvant ;
permettant ainsi de former un produit de réaction d'hydrosilylation comprenant :
I) le composé alcoxysilalkylènesilane à fonctionnalité carbamate, et
J) un produit secondaire.

7. Procédé selon la revendication 6, où chaque R¹ est un groupe méthyle ou un groupe éthyle.

8. Procédé de préparation du composé alcoxysilalkylènesilane à fonctionnalité carbamate selon l'une quelconque des revendications 1 à 5, dans lequel le procédé comprend :
1) la combinaison, dans des conditions permettant d'obtenir une réaction, de matières premières comprenant
F) un alcoxysilane à fonctionnalité alcényle de formule R³Si(OR⁴)₃, où R³ est un groupe alcényle et R⁴ est tel que décrit ci-dessus ;
D) un hydridochlorosilane de formule ClSiR²₂H, où R² est tel que décrit ci-dessus ;
G) un catalyseur de réaction d'hydrosilylation ; et
facultativement H) un solvant ;
permettant ainsi de former un produit de réaction d'hydrosilylation comprenant
E') un chlorodialkyl((trialcoxysilyl)alkylène)silane comprenant la formule ClSiR²₂-D-Si(OR⁴)₃ ; où R², D et R⁴ sont tels que décrits ci-dessus ; et
2) la combinaison, dans des conditions permettant d'obtenir une réaction, de matières premières comprenant
E') le chlorodialkyl((trialcoxysilyl)alkylène)silane ;
C) un sel de carbamate ; et
facultativement H) un solvant ;
permettant ainsi de former un produit de réaction comprenant
I) le composé alcoxysilalkylènesilane à fonctionnalité carbamate, et
J') un produit secondaire.

9. Procédé selon la revendication 8, où chaque R¹ est un atome d'hydrogène.

10. Procédé de préparation d'un polyorganosiloxane à fonctionnalité polyalcoxy, dans lequel le procédé comprend :
i) la mise en pratique du procédé selon l'une quelconque des revendications 6 à 9, permettant ainsi de former I) le composé alcoxysilalkylènesilane à fonctionnalité carbamate ;
ii) la combinaison, dans des conditions permettant d'obtenir une réaction de coiffage, de matières premières comprenant
I) le composé alcoxysilalkylènesilane à fonctionnalité carbamate ; et
II) un polyorganosiloxane ayant un fragment silanol.

11. Procédé de préparation d'un polyorganosiloxane à fonctionnalité polyalcoxy, dans lequel le procédé comprend :
1) la combinaison, dans des conditions permettant d'obtenir une réaction de coiffage, de matières premières comprenant :
I) le composé alcoxysilalkylènesilane à fonctionnalité carbamate selon l'une quelconque des revendications 1 à 5 ; et
II) un polyorganosiloxane ayant un fragment silanol.

12. Procédé selon la revendication 10 ou la revendication 11, où II) le polyorganosiloxane est un polydiorganosiloxane à terminaison bis-hydroxyle de formule 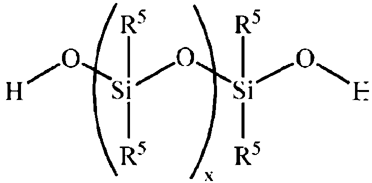 où chaque R⁵ est choisi indépendamment dans le groupe constitué de groupes alkyle, groupes alcényle, et groupes aryle, et l'indice x représente le degré de polymérisation et a une valeur moyenne de 1 à 2 000.

13. Procédé selon la revendication 12, où le polydiorganosiloxane à terminaison bis-hydroxyle est un polydiméthylsiloxane à terminaison bis-hydroxyle.

14. Polyorganosiloxane à fonctionnalité polyalcoxy préparé par le procédé selon la revendication 12, où le polyorganosiloxane à fonctionnalité polyalcoxy comprend la formule : 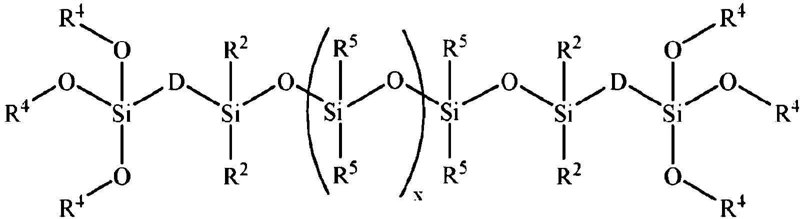 où l'indice x et R⁵, R², D, et R⁴ sont tels que décrits ci-dessus.

15. Utilisation du polyorganosiloxane à fonctionnalité polyalcoxy selon la revendication 14 dans une composition de polyorganosiloxane durcissable par réaction de condensation.
